# EUROPÄISCHE PATENTSCHRIFT

(11) **EP 0 834 009 B1**
(45) Veröffentlichungstag und Bekanntmachung des Hinweises auf die Patenterteilung: **26.01.2000**
(21) Anmeldenummer: 96938962.6
(22) Anmeldetag: 11.10.1996
(51) Int. Cl.: F02D 41/40

(54) **SYSTEM ZUR STEUERUNG DER KRAFTSTOFFZUMESSUNG IN EINE BRENNKRAFTMASCHINE**
SYSTEM FOR CONTROLLING FUEL METERING IN AN INTERNAL COMBUSTION ENGINE
SYSTEME COMMANDANT LE DOSAGE DU CARBURANT DANS UN MOTEUR A COMBUSTION INTERNE

(30) Priorität: 26.03.1996 DE 19611803
(43) Veröffentlichungstag der Anmeldung: 08.04.1998
(73) Patentinhaber: ROBERT BOSCH GMBH, 70442 Stuttgart (DE)
(72) Erfinder: KIRSCHNER, Michael, D-71638 Ludwigsburg (DE)
(86) Internationale Anmeldenummer: DE9601943
(87) Internationale Veröffentlichungsnummer: WO9736100

(56) Entgegenhaltungen:
- EP-A- 0 400 389
- DE-A- 3 426 799
- DE-A- 4 133 856
- US-A- 5 172 298
- PATENT ABSTRACTS OF JAPAN vol. 009, no. 202 (M-405), 20.August 1985 & JP 60 065272 A (NIPPON JIDOSHA BUHIN SOGO KENKYUSHO KK), 15.April 1985,

## Beschreibung

### Stand der Technik

Die Erfindung betrifft ein System zur Steuerung der Kraftstoffzumessung in eine Brennkraftmaschine gemäß den Oberbegriffen der unabhängigen Ansprüche. (Vergleiche Abstract der JP-A-6006 5272.)

Ein anderes System zur Steuerung der Kraftstoffzumessung in eine Brennkraftmaschine ist aus der DE-OS 35 40 811 bekannt. Dort werden ein Verfahren und eine Vorrichtung zur Steuerung der Kraftstoffzumessung in eine Brennkraftmaschine, insbesondere eine selbstzündende Brennkraftmaschine beschrieben. Bei dem dort beschriebenen Kraftstoffzumeßsystem handelt es sich um ein sogenanntes Pumpe-Düse-System. Hierbei treibt eine Nockenwelle ein in einem Pumpenzylinder angeordneten Pumpenkolben an. Ein elektromagnetisches Schaltventil steuert den Kraftstofffluß zu einem Elementraum abhängig von verschiedenen Betriebsparametern. Der Druck im Elementraum wird bei dieser Vorrichtung nicht erfaßt. Eine genaue Kraftstoffzumessung ist daher nicht möglich.

Desweiteren sind aus der DE-OS 34 26 799 (US-A-4,653,447) ein Verfahren und eine Vorrichtung zur Steuerung der Kraftstoffzumessung bekannt, bei der der Beginn und das Ende der Kraftstoffzumessung mittels eines Magnetventils steuerbar ist. Der Beginn und das Ende der Kraftstofförderung, die das elektromagnetische Ventil festlegt, wird anhand des Stromverlaufs, des durch das Magnetventil fließenden Stromes erkannt.

### Vorteile der Erfindung

Mit der erfindungsgemäßen Vorgehensweise ist eine exakte Steuerung der Kraftstoffzumessung in eine Brennkraftmaschine möglich.

Diese Vorteile werden mit geringem Aufwand erreicht, insbesondere sind keine zusätzlichen Anschlüsse und Kabelverbindungen zwischen der Kraftstoffzumeßeinheit und der Steuerung erforderlich.

Zweckmäßige und vorteilhafte Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 eine schematische Darstellung des Kraftstoffzumeßsystems, Figur 2 ein vereinfachtes Schaltbild der erfindungsgemäßen Vorrichtung und Figur 3 der Verlauf des Stromes und der Ableitung des Stromes über der Zeit t aufgetragen.

### Beschreibung der Ausführungsbeispiele

Im folgenden wird die erfindungsgemäße Vorgehensweise am Beispiel einer sogenannten Pumpe-Düse-Einheit beschrieben. Die erfindungsgemäße Vorgehensweise ist aber nicht auf diese Anwendung beschränkt. Sie kann bei allen Kraftstoffzumeßsystemen eingesetzt werden, bei denen ein Induktivsensor, insbesondere ein Drucksensor, und ein elektromagnetisches Ventil eingesetzt werden. Dies kann beispielsweise auch bei magnetventilgesteuerten Verteilerpumpen und bei sogenannten Common-Rail-Systemen der Fall sein. Die erfindungsgemäße Vorgehensweise kann auch bei Systemen eingesetzt werden, bei denen das elektromagnetische Ventil nur den Beginn oder nur das Ende der Zumessung festlegt.

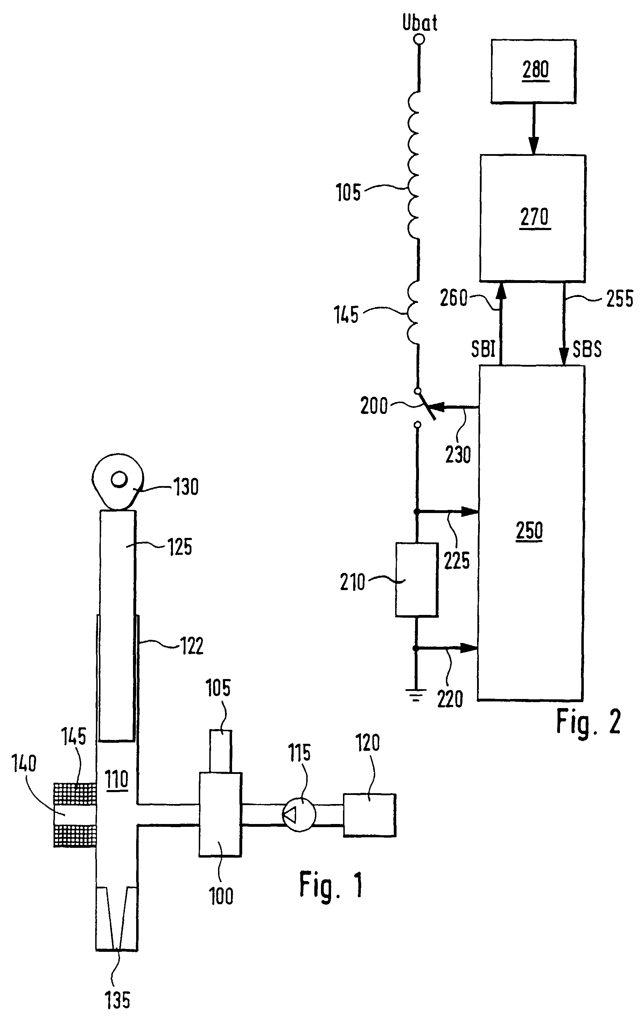

In Figur 1 ist die erfindungsgemäße Vorrichtung zur Steuerung der Kraftstoffzumessung vereinfacht als Blockdiagramm dargestellt. Ein elektromagnetisches Schaltventil 100, das eine Spule 105 umfaßt, gibt die Verbindung zwischen einem Elementraum 110, der auch als Hochdruckbereich bezeichnet werden kann, und einem Niederdruckbereich frei. Eine Kraftstofförderpumpe 115 fördert Kraftstoff aus einem Kraftstoffvorratsbehälter 120 in den Niederdruckbereich.

Der Elementraum 110 wird von einem Pumpenzylinder gebildet. In dem Pumpenzylinder 122 ist ein Pumpenkolben 125 angeordnet. Der Pumpenkolben 125 wird von einem Nocken 130, der von einer Welle angetrieben wird, angetrieben. Der Pumpenkolben 125 und ein Einspritzventil 135 begrenzen den Elementraum 110. Am Elementraum 110 ist ein Drucksensor 140, der eine Spule 145 umfaßt, angeordnet.

Diese Einrichtung arbeitet wie folgt. Die Kraftstofförderpumpe 115 fördert Kraftstoff vom Vorratsbehälter 120 in den Elementraum 110. Der Nocken 130, der von einer Welle beispielsweise der Nockenwelle der Brennkraftmaschine unmittelbar angetrieben wird, treibt den Pumpenkolben 125 an. Der Pumpenkolben 125 bewegt sich abhängig von der Stellung des Nockens 130 auf und ab. Bei der Abwärtsbewegung wird der Kraftstoff, der sich im Elementraum 110 befindet, von dem Pumpenkolben 125 unter Druck gesetzt. Bei Erreichen eines bestimmten Druckes öffnet das Einspritzventil 135 und der Kraftstoff gelangt durch die Einspritzdüse 135 in den Brennraum der Brennkraftmaschine.

Ein Druckaufbau im Elementraum 110 ist nur bei geschlossenem Schaltventil 100 möglich. Bei geöffnetem Schaltventil 100 ist kein Druckaufbau und damit keine Einspritzung möglich. Durch Öffnen und Schließen des Schaltventils 100 kann der Beginn und das Ende der Kraftstoffzumessung gesteuert werden. Beim Öffnen bzw. beim Schließen des Schaltventils ändert sich die Induktivität der Spule 105. Diese Änderung der Induktivität der Spule 105 kann durch Auswerten des Stromverlaufs erkannt werden.

Der Drucksensor 140 erfaßt den Druck im Elementraum 110. Erfindungsgemäß ist vorgesehen, daß bei Erreichen eines vorgegebenen Druckwertes der Drucksensor ein Signal bereitstellt. Hierzu ist vorgesehen, daß der Drucksensor so ausgestaltet ist, daß bei Erreichen einer Druckschwelle sich die Induktivität der Spule 145 ändert. Bei dem Drucksensor 140 handelt es sich beispielsweise um eine Art Barometerdose, die in die Pumpe-Düse-Einheit integriert ist. Bei Erreichen einer Druckschwelle bewegt sich ein magnetisch leitender Anker in der Spule, was zu einer Änderung der Induktivität der Spule 145 führt.

Erfindungsgemäß ist vorgesehen, daß die Induktivität 145 des Drucksensors 140 und der Spule 105 in Reihe geschaltet sind. Durch Messen der Gesamtinduktivität kann in einfacher Weise sowohl die Induktivitätsänderung des Drucksensors 140 als auch die Änderung des Schaltzustandes des Schaltventils 100 erkannt werden. Durch die Serienschaltung von Magnetventilwicklung und Drucksensor sind keine zusätzlichen Anschlüsse an der Pumpe-Düse-Einheit erforderlich. Desweiteren sind keine zusätzlichen Kabel zwischen Pumpe-Düse-Einheit und einem Steuergerät erforderlich.

In Figur 2 ist die elektrische Beschaltung der verschiedenen Elemente dargestellt. Bereits in Figur 1 beschriebene Elemente sind mit entsprechenden Bezugszeichen bezeichnet. Die Spule 105 des Schaltventils 100 und Spule 145 des Drucksensors 140 sind in Reihe geschaltet. Mit einem Anschluß stehen sie mit Batteriespannung Ubat und mit einem zweiten Anschluß mit einem Schaltmittel 200 in Verbindung. Ein zweiter Anschluß des Schaltmittels 200 steht über ein Meßmittel 210 mit Masse in Verbindung. Bei dem Meßmittel handelt es sich in der einfachsten Ausgestaltung um einen ohmschen Widerstand. Die Anschlüsse für die Batteriespannung und die Masse können auch vertauscht werden.

Das Schaltmittel 200 wird über eine Leitung 230 von einer Steuerung 250 mit Ansteuersignalen beaufschlagt. Am Verbindungspunkt zwischen dem Schaltmittel 200 und dem Meßmittel 210 gelangt über die Leitung 225 ein Signal an die Steuerung 250. Entsprechend gelangt über eine Leitung 220 ein Signal vom zweiten Anschluß des Meßmittels und der Masse zur Steuerung 250.

Die Induktivitäten, das Schaltmittel 200 und das Meßmittel 210 können auch in einer anderen Reihenfolge in der Reihe zwischen der Batteriespannung Ubat und Masse angeordnet werden.

Die Steuerung beaufschlagt über eine Leitung 260 eine Motorsteuerung 270 mit Signalen SBI und empfängt über eine Leitung 255 Signale SBS von der Motorsteuerung 270. Die Motorsteuerung 270 wird von verschiedenen Sensoren 280 mit Signalen beaufschlagt. Hierbei handelt es sich beispielsweise um Drehzahlsensoren und Sensoren, die den Fahrerwunsch erkennen.

Ausgehend von den Ausgangssignalen der Sensoren 280, die verschiedenen Betriebsparameter erfassen, berechnet die Motorsteuerung 270 verschiedene Signale, die die Kraftstoffzumessung bestimmen. So gibt die Motorsteuerung 270 beispielsweise einen Mengenwunsch für die eingespritzte Menge und ein Signal, das den Einspritzbeginn charakterisiert an die Steuerung 250. Die Steuerung 250 steuert abhängig von diesem Signal und ggf. weiteren Signalen das Schaltmittel 200 über die Steuerleitung 230 an.

Die Steuerung 250 wertet den Spannungsabfall am Meßmittel 210 aus. Dieser Spannungsabfall ist ein Maß für den durch die Induktivitäten 105 und 145 fließenden Strom. Ausgehend von dem Stromverlauf erkennt die Steuerung den Beginn der Einspritzung SBI und gibt ein entsprechendes Signal an die Motorsteuerung. Desweiteren erkennt die Steuerung 250 den Zeitpunkt, bei dem der Drucksensor ein Signal erzeugt, das anzeigt, daß der Druck im Elementraum 110 einen vorgegebenen Schwellwert überschritten hat.

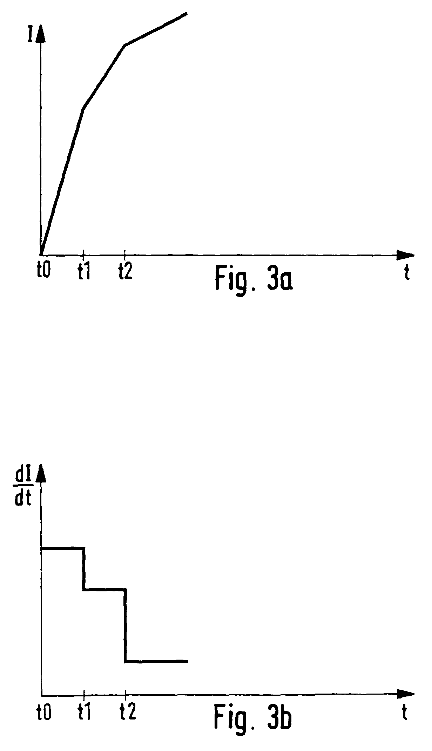

Der Verlauf des Stroms und der Verlauf der Ableitung des Stroms ist in Figur 3 über der Zeit T aufgetragen. Die Darstellung des Stromverlaufs und der Ableitung ist in Figur 3 stark vereinfacht dargestellt.

In Figur 3a ist der Stromverlauf und in Figur 3b die zeitliche Ableitung dI/dt über der Zeit t aufgetragen.

Zum Zeitpunkt t0 gibt die Steuerung 250 ein Signal über die Ansteuerleitung 230 ab, so daß das Schaltmittel 200 schließt und den Stromfluß durch die Induktivitäten 105 und 145 freigibt. Dies bewirkt, daß der Strom über der Zeit ansteigt. Der Stromanstieg ist sehr steil, was einen hohen Wert für die Ableitung des Stroms dI/t zur Folge hat. Zum Zeitpunkt t1 ändert das Schaltventil seine Stellung, das heißt, es geht in seine geschlossene Position über. Dies hat eine Änderung der Induktivität zur Folge, was zu einer Abflachung des Stromanstiegs führt.

Ab dem Zeitpunkt t1 nimmt die Ableitung des Stroms dI/dt einen niederen Wert an. Durch Auswerten des Stromverlaufs, beispielsweise durch Auswerten der Ableitung des Stroms nach der Zeit, kann der Zeitpunkt t1 von der Steuerung 250 ermittelt werden. Zur Ermittlung des Zeitpunktes tl können auch andere Verfahren verwendet werden.

Das Schließen des Schaltventils 100 hat zur Folge, daß der Druck im Elementraum 110 ansteigt. Zum Zeitpunkt t2 erreicht der Druck im Elementraum 110 einen Schwellwert, der zur Folge hat, daß der Drucksensor anspricht. Dies bedeutet, daß sich die Induktivität der Spule 145 des Drucksensors ebenfalls ändert. Dies hat zur Folge, daß der Stromanstieg sich weiter verflacht und die Ableitung dI/dt einen kleineren Wert abnimmt.

Durch Auswerten des Stromverlaufs, beispielsweise der Ableitung des Stromverlaufs kann auch dieser Zeitpunkt t2 von der Steuerungen 250 sicher erkannt werden.

Durch Auswerten des Stromverlaufs insbesondere der Ableitung des Stromverlaufs kann die Steuerung zwei Größen sicher erkennen. Dies sind zum einen der Schaltzeitpunkt des Magnetventils der dem Förderbeginn entspricht und zum anderen das Erreichen des Schwellwertes des Drucks, der ein Maß für den Einspritzbeginn darstellt.

Der in Figur 3 dargestellte Verlauf des Stroms I und der Ableitung des Stroms dI/dt ist lediglich beispielhaft. Je nach Ausgestaltung des Magnetventils und Typ des Magnetventils bzw. des Drucksensors können sich andere Stromverläufe ergeben. Bei allen Stromverläufen gemeinsam ist es, daß zum Zeitpunkt tl und zum Zeitpunkt t2, bei denen das Schaltventil 100 seine neue Stellung einnimmt bzw. der Druckschalter schaltet, sich eine Änderung des Stromverlaufs ergibt. Insbesondere ergibt sich eine Änderung der Steigung des Stromverlaufs. Das heißt, die Ableitung des Stroms dI/dt ändert sich sprungförmig.

Alternativ kann auch vorgesehen sein, daß der Strom auf einen vorgebbaren Wert geregelt wird. In diesem Fall ändert sich die Spannung, die an der Reihenschaltung der Induktivitäten anliegt. Durch Auswertung des Spannungsverlauf können ebenfalls die Zeitpunkte der Induktivitätsänderung erkannt werden.

Die Erkennung dieser Zeitpunkte, bei denen der Stromverlauf eine Änderung aufweist, kann durch vielfältige Verfahren wie beispielsweise in der DE-OS 34 26 799 beschrieben, erfolgen.

## Patentansprüche

1. System zur Steuerung der Kraftstoffzumessung in eine Brennkraftmaschine, insbesondere eine selbstzündende Brennkraftmaschine, mit einem elektromagnetischen Ventil, das den Beginn und/oder das Ende der Kraftstoffzumessung beeinflußt, wobei ein Induktivsensor vorgesehen ist, der ein Signal bereitstellt, das den Zustand des Zumeßsystems charakterisiert, dadurch gekennzeichnet, daß die Induktivität des elektromagnetischen Ventils und des Induktivsensors in Reihe geschaltet sind.

2. System Anspruch 1, dadurch gekennzeichnet, daß die Zeitpunkte ermittelt werden, bei denen sich die Induktivität des Ventils und/oder des Induktivsensors ändert.

3. System nach einem der vorhergehenden Ansprüche, dadurch gekennzeichnet, daß ausgehend von der Änderung der Induktivität das Erreichen eines Druckwertes und oder der Schaltzeitpunkt des Ventils erkannt wird.

4. System nach einem der vorhergehenden Ansprüche, dadurch gekennzeichnet, daß der Strom, der durch das elektromagnetische Ventil und den induktiven Drucksensor fließt, erfaßt wird.

5. System nach einem der vorhergehenden Ansprüche, dadurch gekennzeichnet, daß die Änderung der Induktivität ausgehend von einer Änderung des zeitlichen Verlaufs des erfaßten Stroms erkannt wird.

6. System nach einem der vorhergehenden Ansprüche, dadurch gekennzeichnet, daß der Induktivsensor als Drucksensor ausgebildet ist, der ein Signal bereitstellt, der den Druck in einem Hochdruckteil des Kraftstoffzumßsystems entspricht.

7. System nach einem der vorhergehenden Ansprüche, dadurch gekennzeichnet, daß der Einspritzbeginn und/oder der Förderbeginn ermittelt wird.

## Claims

1. System for controlling the fuel metering to an internal combustion engine, in particular a self-ignition internal combustion engine, having a solenoid valve which influences the start and/or the end of the fuel metering, wherein an inductive sensor is provided which produces a signal that characterizes the state of the metering system, characterized in that the inductance of the solenoid valve and of the inductive sensor are connected in series.

2. System according to Claim 1, characterized in that the times are determined at which the inductance of the valve and/or of the inductive sensor changes.

3. System according to one of the preceding claims, characterized in that the fact that a pressure value and/or the valve switching time has been reached is identified on the basis of the change in the inductance.

4. System according to one of the preceding claims, characterized in that the current which flows through the solenoid valve and the inductive pressure sensor is detected.

5. System according to one of the preceding claims, characterized in that the change in the inductance is identified on the basis of a change in the time profile of the detected current.

6. System according to one of the preceding claims, characterized in that the inductive sensor is designed as a pressure sensor which produces a signal that corresponds to the pressure in a high-pressure section of the fuel metering system.

7. System according to one of the preceding claims, characterized in that the start of injection and/or the start of feeding are/is determined.

## Revendications

1. Système de commande du dosage de carburant d'un moteur à combustion interne, notamment d'un moteur à combustion interne sans allumage commandé, comprenant une électrovanne qui influence le début et/ou la fin du dosage du carburant, et un capteur inductif qui fournit un signal définissant l'état du système de dosage,
caractérisé en ce que
l'inductance de l'électrovanne et celle du capteur inductif sont branchées en série.

2. Système selon la revendication 1,
caractérisé en ce qu'
il détermine les instants auxquels l'inductance de l'électrovanne et/ou celle du capteur inductif change.

3. Système selon l'une quelconque des revendications précédentes,
caractérisé en ce que
partant de la variation de l'inductance, il reconnaît le moment auquel on atteint une valeur de pression et/ou l'instant de commutation de l'électrovanne.

4. Système selon l'une quelconque des revendications précédentes,
caractérisé en ce qu'
il détecte le courant qui traverse l'électrovanne et le capteur inductif de pression.

5. Système selon l'une quelconque des revendications précédentes,
caractérisé en ce qu'
il reconnaît la variation de l'inductance à partir d'une variation de la courbe du courant en fonction du temps.

6. Système selon l'une quelconque des revendications précédentes,
caractérisé en ce que
le capteur inductif est réalisé sous la forme d'un capteur de pression, fournissant un signal qui correspond à la pression dans une partie haute pression du système de dosage de carburant.

7. Système selon l'une quelconque des revendications précédentes,
caractérisé en ce qu'
il détermine le début de l'injection et/ou le début du transfert de carburant.
